# EUROPEAN PATENT SPECIFICATION

(11) **EP 0 403 485 B1**
(45) Date of publication and mention of the grant of the patent: **31.03.1993**
(21) Application number: 89901145.6
(22) Date of filing: 08.12.1988
(51) Int. Cl.: B01D 53/34

(54) **METHOD FOR CLEANING FLUE GASES**
ABGASREINIGUNGSVERFAHREN
PROCEDE D'EPURATION DES GAZ DE FUMEE

(30) Priority: 09.03.1988 SE 8800828
(43) Date of publication of application: 27.12.1990
(73) Proprietor: ABB FLÄKT AB, S-120 86 Stockholm (SE)
(72) Inventor: CARLSSON, Kurt, S-352 42 Växjö (SE)
(74) Representative: Jenkler, Malte
(86) International application number: SE8800667
(87) International publication number: WO8908493

(56) References cited:
- SE-A-80 036 155
- US-A- 3 919 389

## Description

The present invention relates to a method for cleaning process gases, such as flue gases, containing mercury and/or mercury compounds, said process gases being contacted with an aqueous solution or an aqueous supension containing a first absorbent material which is reactive with the mercury and/or mercury compounds of the process gases and is in the form of one or more metal sulphides, preferably sodium sulphide, for separating said mercury and/or mercury compounds from the process gases.

In connection with the incineration of refuse, such as domestic waste, in large incineration plants, there are considerable emissions of mercury and/or mercury compounds with the flue gases produced. This mercury, which originates e.g. from batteries contained in and burnt with the domestic waste, is a major environmental problem. The flue gases generally also contain acidifying gases, especially hydrogen chloride, which also constitutes an environmental problem.

In order to solve these environmental problems, different techniques have been proposed for separating mercury and/or mercury compounds as well as acidifying gases from flue gases.

SE-8304716-7 describes a method for separating water-soluble mercury compounds and hydrogen chloride by washing the flue gases in a gas washing device by means only of the water present in the flue gases.

One drawback of this method is that the hydrogen chloride which is dissolved in the washing water in the form of hydrochloric acid has a highly corrosive effect on the gas washing device. This in turn results in that the gas washing device requires extensive maintenance to operate in a satisfactory manner.

Another drawback of this method is that the washing water must be purified before it is discharged into the environment. This purification is here achieved by adding e.g. sodium sulphide and lime which react with the mercury compound and the hydrogen chloride, respectively, and bring about precipitation thereof in the washing water. These precipitates are then separated from the washing water by means of conventional filters.

The extensive maintenance required and the purification of the water mean that cleaning of flue gases according to the above-mentioned method becomes very expensive.

US-A-3,919,389 discloses a method for separating mercury vapour from process gases emitted from a plant for manufacturing e.g. measuring instruments. The mercury vapour is separated by spraying a finely divided aqueous solution containing sodium sulphide, into the process gases. The sodium sulphide reacts with the mercury vapour, and the reaction products form solid particles which are separated, together with the injected water droplets, in succeeding moisture-separating filters and baffles. One drawback of this method is that the water used must be filtered for separation of said particles before it can be discharged into the environment.

SE-8003615 finally discloses a method for separating mercury compounds from flue gases from refuse incineration plants by spraying a finely divided aqueous liquid into the flue gases. This liquid will be evaporated by the hot flue gases, which means that the flue gases and fly ash entrained therein will be cooled. Since fly ash is able, at low temperatures, to reduce the content of certain mercury compounds in the flue gases by an adsorption process, said spraying of liquid will contribute to reduce the content of mercury compounds in the flue gases. Preferably, hydrated lime (Ca(OH)₂) is added to the liquid to reduce the risk of mercury being washed out of the fly ash when it is deposited, and to provide separation of acidifying gases, such as hydrogen chloride, from the flue gases.

The major drawback of this method is that it merely brings about an approximately 50% separation of the mercury present in the flue gases, which is not sufficient for complying with current limit values for mercury emissions into the atmosphere.

The object of the present invention therefore is to provide a method for cleaning flue gases which is simple and inexpensive to carry out while ensuring an at least 90% separation of the mercury and/or mercury compounds in the flue gases. The method of the invention should also permit separating any acidifying gases present in the flue gases.

According to the invention, this object is achieved by a method which is of the type stated in the introduction to this specification and which is characterised by supplying the water in such an amount and in such a finely divided state that it is completely evaporated when contacting the process gases.

Preferably, a second absorbent material reactive with the acidifying gases possibly contained in the process gases is supplied to the process gases in the form of an aqueous suspension or a dry powder for separating the acidifying gases from the process gases.

The first and the second absorbent material can be supplied to the process gases in the same aqueous suspension, or the second absorbent material may alternatively be supplied to the process gases in the form of a dry powder downstream of the supply of an aqueous solution or aqueous suspension containing the first absorbent material.

The invention will be described in more detail hereinbelow with reference to the accompanying drawings, in which:
Fig. 1 schematically shows an installation for cleaning flue gases from a central boiler plant fired with domestic waste, which installation comprises a contact reactor for carrying out a first variant of the method according to the present invention; and
Fig. 2 schematically shows a contact reactor designed according to another principle for carrying out a second variant of the method according to the invention.

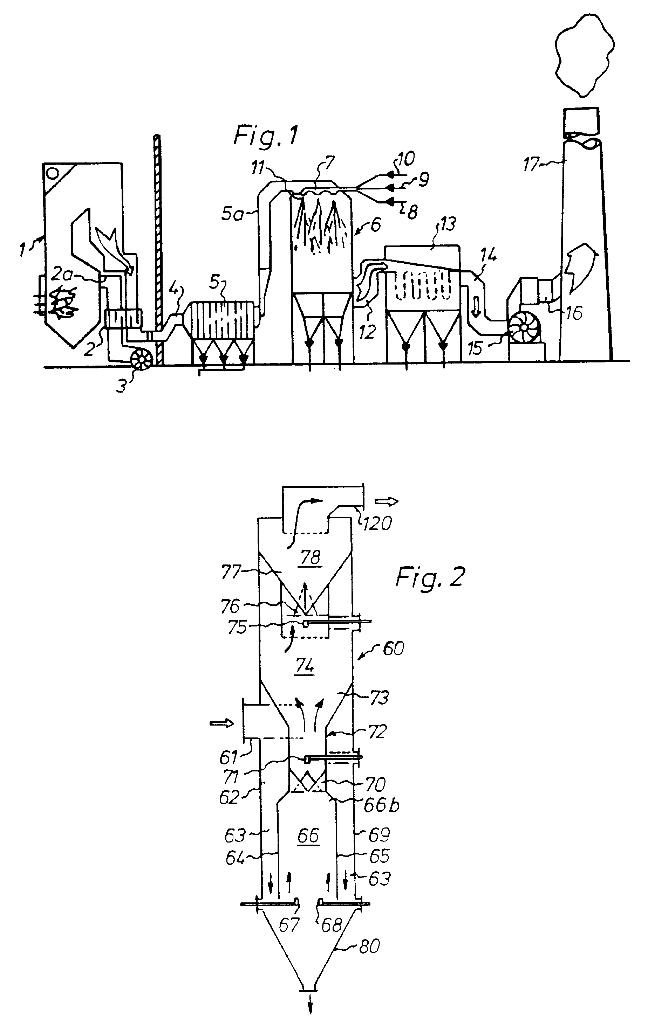

The flue gases formed in connection with the incineration of waste in the central boiler plant 1 shown in Fig. 1 are conducted in a conventional manner to a preheater 2. This is adapted to transfer heat from the hot flue gases to combustion air which via a duct 2a is supplied to the central boiler plant by means of a fan 3.

The hot flue gases are led through a duct 4 to an electrostatic precipitator 5 and from there through a duct 5a to a contact reactor 6. When flowing into the contact reactor, the flue gases thus contain substantially gaseous pollutants, such as mercury, mercury compounds, gaseous hydrogen chloride and sulphur dioxide.

In its top part, the contact reactor 6 has a device 7 which is supplied by a conduit 8 with a first medium in the form of air, by a conduit 9 with a second medium in the form of sodium sulphide particles which are dissolved or suspended in water and which constitute an absorbent material reactive with the mercury or the mercury compounds, and by a conduit 10 with a third medium in the form of lime particles which are dissolved or suspended in water and which constitute an absorbent material reactive with the hydrogen chloride and the sulphur dioxide. These three media are mixed in the de-device 7 and sprayed through a number of nozzles 11 into the interior of the contact reactor in a manner to achieve efficient mixing of the flue gases and the sprayed mixture. The water sprayed into the contact reactor 6 is supplied in such an amount and in such a finely divided state that it is completely evaporated when contacting the hot flue gases. This contact reactor thus operates according to the wet-dry method.

The sodium sulphide and the mercury or mercury compounds then form mercury sulphide in the form of particles. The lime and the hydrogen chloride form calcium chloride in the form of particles while the lime and the sulphur dioxide form calcium sulphite and/or calcium sulphate in the form of particles.

Suitable nozzles 11 are described e.g. in EP-A-0079081 and EP-A-0185630.

The heavier particles drop onto the bottom of the contact reactor 6 while the lighter particles accompany the flue gases to a bag filter 13 through a duct 12. In the bag filter, the last-mentioned particles are separated from the flue gases which are led through a duct 14 to a flue gas fan 15 which, through a duct 16, feeds the flue gases cleaned of dust and acidifying gases to a chimney 17 for emission into the atmosphere.

Fig. 2 illustrates a contact reactor 60 which operates both according to the wet-dry method and to the dry method. Such a contact reactor has been previously described in EP-A-0200695.

The contact reactor 60 is intended to be disposed in the installation shown in Fig. 1 in exactly the same manner as the contact reactor 6 and, like this reactor, converts by an absorption process the gaseous pollutants of the flue gases into particles which are separated from the flue gases in the succeeding bag filter 13.

The flue gases are supplied to the contact reactor 60 via a connecting part 61 which is designed as a tangential inlet into the central portion of the contact reactor and opens into a cylindrical chamber 62 which is narrower at the bottom end so as to form a cylindrical gap 63.

The gap 63 is defined by the outer casing 69 of the contact reactor 60 and inner wall portions 64, 65 defining between them an internal generally cylindrical space 66 at the lower portion of which nozzles 67, 68 are so arranged as to project into the space 66. The upper portion 66b of the space 66 is tapering and opens into a tubular element 72 centrally disposed in the chamber 62 and having a large cross-sectional area in relation to the gap 63. The tubular element 72 is provided with a first turbulence-generating means 70 and, downstream thereof, with a first means 71 for supplying dry lime powder to the interior of the element 72.

As shown in Fig. 2, the tubular element 72 opens into a diverging part 73 extending between the element 72 and the outer casing 69 of the contact reactor 60. Downstream of the diverging part 73, there is a first reaction part 74 which thus is defined by the outer casing 69 of the contact reactor and consequently will have a maximal cross-sectional area. The reaction part 74 is provided with a second means 75 for supplying dry lime powder to the interior, upper portion of the reaction part. Downstream of this second means 75, there are further provided a second turbulence-generating means 76, a mixing part 77, and a second reaction part 78.

The first and second turbulence-generating means 70 and 76, respectively, preferably are of the type shown and described in EP-A-0185632.

The flue gases will thus flow through the connecting part 61 into the chamber 62 from where they are conducted, after a certain velocity increase, through the gap 63, passing along the outer surfaces of the wall portions 64, 65 to which they emit a certain part of their thermal energy. In this manner, the wall portions will be heated at the same time as the flue gases are cooled.

When the flue gases reach the lower portion of the gap 63, they are forced to turn through 180° so as to enter into the space 66 (Fig. 2) into which the nozzles 67, 68 spray an unpwardly directed mist of finely divided liquid. This liquid consists of water with dissolved or suspended sodium sulphide particles forming an absorbent material reactive with the mercury and/or mercury compounds of the flue gases. Since the sodium sulphide thus is supplied to the flue gases at the very inlet of the space 66, a long residence time will be achieved, facilitating the mixture of and thus the reaction between the sodium sulphide and the mercury and/or mercury compounds of the flue gases. The following chemical reaction may be considered the predominant one:

HgCl₂ + (Na)₂S = HgS + 2NaCl

where HgS and NaCl form a separable solid material.

The water sprayed into the space 66 is supplied in such an amount and in such a finely divided state that it is completely evaporated when contacting the hot flue gases which thus are cooled. The flue gases in the space 66, thus serving as evaporation zone, will then have a temperature which is close to, but slightly above the dew point temperature.

Since, as pointed out above, the outer surfaces of the wall portions 64, 65 are heated by the flue gases, the temperature of the wall portions will exceed the dew point temperature of the flue gases present in the space, whereby build-up of dust on the inner surfaces of the wall portions is eliminated.

It may here be pointed out that the above-mentioned chemical reaction preferably takes place in the aqueous phase, but that it proceeds to some extent also in the dry phase.

After the flue gases have passed through the space 66 and there reacted with the sodium sulphide particles supplied, they are led into the tubular element 72 in which eddies are produced in the flue gases by the turbulence-generating means 70 while lime powder is being supplied by the first means 71. This ensures efficient mixing of flue gases and lime powder in the succeeding diverging part 73. This facilitates the reaction in the reaction part 74 between the lime particles of the lime powder and the acidifying gases of the flue gases, especially hydrogen chloride, which bind chemically to the lime particles by an absorption process. This means that the acidifying gases of the flue gases, like the mercury and/or mercury compounds of the flue gases, are converted into particles which can thereafter be separated from the flue gases in the succeeding bag filter 13.

The flue gases are then led further up through the contact reactor 60, the second means 75, the second turbulence-generating means 76, the mixing part 77 and the second reaction part 78 bringing about a repetition of the above-described reaction between lime powder and the acidifying gases of the flue gases. In this manner, improved separation of the acidifying gases is achieved.

The flue gases now cleaned of gaseous pollutants then pass through the duct 120 to the bag filter 13 and from there through the duct 14, the flue gas fan 15 and the duct 16, to the chimney 17 for emission into the atmosphere, as described above.

In order to minimise the consumption of sodium sulphide, it is vital that separated material which contains sodium sulphide not used, can be recirculated. It is then of course desirable to recirculate as large an amount of unreacted material as possible while minimising the recirculation of inert material from the combustion. To achieve this, a pre-separator 80 (Fig. 2) for separating coarse pollutants has been disposed below the nozzles 67, 68 of the contact reactor 60.

To illustrate the technical effect, it may be mentioned that in tests carried out with a combustion of 15 tons of domestic waste per hour and with a flue gas temperature of 140°C, the following mean values could be established when the mercury content of the flue gas prior to cleaning fluctuated between 500 and 1000 µg per standard cubic meter (Nm³).

With an addition of 0.5 kg (Na)₂S per hour, 372 µg mercury per Nm³ was emitted;
with an addition of 1.0 kg (Na)₂S per hour, 10 µg mercury per Nm³ was emitted, and;
with an addition of 2.0 kg (Na)₂S per hour, 4 µg mercury per Nm³ was emitted.

The invention is of course not restricted to the different variants described above but may be modified in several different ways within the scope of the accompanying claims.

For instance, the sodium sulphide-containing aqueous solution or aqueous suspension can be supplied to the flue gases in a cooler (instead of the contact reactor 6 or 60) which is disposed upstream of the contact reactor, which means that the flue gases will enter into the contact reactor slightly cooled.

In the variants of the invention described above, sodium sulphide has been used as absorbent material for the mercury and/or mercury compounds of the flue gases. Naturally, it is also possible to use other metal sulphides to this end. Tests have however shown that sulphides based on alkali metals or alkaline earth metals are especially suitable as absorbent material for mercury and/or mercury compounds. It may here be pointed out that with the method according to the invention also other heavy metals than mercury, e.g. cadmium and lead, are separated.

## Claims

1. Method for cleaning process gases, such as flue gases, containing mercury and/or mercury compounds, the process gases being contacted with an aqueous solution or an aqueous suspension containing a first absorbent material which is reactive with the mercury and/or mercury compounds of the process gases and is in the form of one or more metal sulphides, preferably sodium sulphide, for separating said mercury and/or mercury compounds from the process gases, **characterised** by supplying the water in such an amount and in such a finely divided state that it is completely evaporated when contacting the process gases.

2. Method as claimed in claim 1, **characterised** in that a second absorbent material reactive with the acidifying gases possibly contained in the process gases is supplied to the process gases in the form of an aqueous suspension.

3. Method as claimed in claim 1, **characterised** in that a second absorbent material reactive with the acidifying gases possibly contained in the process gases is supplied to the process gases in the form of a dry powder.

4. Method as claimed in claim 2, **characterised** in that said first and said second absorbent material are supplied to the process gases in the same aqueous suspension.

5. Method as claimed in claim 3, **characterised** in that said dry powder is supplied downstream of the supply of an aqueous solution or aqueous suspension containing said first absorbent material.

## Patentansprüche

1. Verfahren zur Reinigung von Betriebsgasen, wie etwa Rauchgasen, die Quecksilber und/oder Quecksilberverbindungen enthalten, wobei die Betriebsgase mit einer wäßrigen Lösung oder einer wäßrigen Suspension in Kontakt gebracht werden, die ein erstes Absorbens enthalten, das mit Quecksilber und/oder Quecksilberverbindungen umsetzbar ist und in der Form eines oder mehrerer Metallsulfide, vorzugsweise von Natriumsulfid, vorliegt, zur Abtrennung des Quecksilbers und/oder der Quecksilberverbindungen aus den Betriebsgasen,
**dadurch gekennzeichnet,** daß das Wasser in einer solchen Menge und in einem so fein verteilten Zustand zugeführt wird, daß es vollständig verdampft, wenn es mit den Betriebsgasen in Kontakt kommt.

2. Verfahren, wie in Anspruch 1 beansprucht, **dadurch gekennzeichnet**, daß ein zweites Absorbens, das mit saueren Gasen, welche möglicherweise in den Betriebsgasen enthalten sind, umsetzbar ist, den Betriebsgasen in Form einer wäßrigen Suspension zugeführt wird.

3. Verfahren, wie in Anspruch 1 beansprucht, **dadurch gekennzeichnet**, daß ein zweites Absorbens, das mit saueren Gasen, welche möglicherweise in den Betriebsgasen enthalten sind, umsetzbar ist, den Betriebsgasen in Form eines trockenen Pulvers zugeführt wird.

4. Verfahren, wie in Anspruch 2 beansprucht, **dadurch gekennzeichnet**, daß das erste und zweite Absorbens den Betriebsgasen in derselben wäßrigen Suspension zugeführt werden.

5. Verfahren, wie in Anspruch 3 beansprucht, **dadurch gekennzeichnet**, daß besagtes trockenes Pulver stromabwärts der Zufuhr einer wäßrigen Lösung oder wäßrigen Suspension, die das erste Absorbens enthält, zugeführt wird.

## Revendications

1. Méthode de nettoyage de gaz de procédé, comme des gaz de combustion, contenant du mercure et/ou des composés de mercure, les gaz de procédé étant mis en contact avec une solution aqueuse ou une suspension aqueuse contenant une première matière absorbante qui réagit avec le mercure et/ou les composés de mercure des gaz de procédé et a la forme d'un ou plusieurs sulfures de métal, de préférence du sulfure de sodium, pour la séparation dudit mercure et/ou desdits composés de mercure des gaz de procédé, caractérisée en ce qu'on fournit l'eau en une quantité telle et à un état si finement divisé qu'elle est complètement évaporée lorsqu'elle contacte les gaz de procédé.

2. Méthode selon la revendication 1, caractérisée en ce qu'une seconde matière absorbante, réagissant avec les gaz acidifiants éventuellement contenus dans les gaz de procédé, est fournie aux gaz de procédé sous la forme d'une suspension aqueuse.

3. Méthode selon la revendication 1, caractérisée en ce qu'une seconde matière absorbante, réagissant avec les gaz acidifiants éventuellement contenus dans les gaz de procédé, est fournie aux gaz de procédé sous la forme d'une poudre sèche.

4. Méthode selon la revendication 2, caractérisée en ce que les première et seconde matières absorbantes sont fournies aux gaz de procédé dans la même suspension aqueuse.

5. Méthode selon la revendication 3, caractérisée en ce que ladite poudre sèche est fournie en aval de la fourniture d'une solution aqueuse ou d'une suspension aqueuse contenant ladite première matière absorbante.
